# EUROPÄISCHE PATENTSCHRIFT

(11) **EP 2 861 890 B1**
(45) Veröffentlichungstag und Bekanntmachung des Hinweises auf die Patenterteilung: **20.07.2016**
(21) Anmeldenummer: 13724251.7
(22) Anmeldetag: 21.05.2013
(51) Int. Cl.: F16H 25/20, B62D 7/20, B62D 7/14

(54) **VERSTELLVORRICHTUNG FÜR EIN FAHRWERK EINES FAHRZEUGS**
ADJUSTMENT DEVICE FOR A VEHICLE CHASSIS
DISPOSITIF DE RÉGLAGE DU CHÂSSIS D'UN VÉHICULE

(30) Priorität: 18.06.2012 DE 102012210226
(43) Veröffentlichungstag der Anmeldung: 22.04.2015
(73) Patentinhaber: ZF Friedrichshafen AG, 88038 Friedrichshafen (DE)
(72) Erfinder: KUHNT, Torsten, 49356 Diepholz (DE)
(86) Internationale Anmeldenummer: PCT/EP2013/060343
(87) Internationale Veröffentlichungsnummer: WO 2013/189678

(56) Entgegenhaltungen:
- EP-A1- 2 266 863
- EP-A2- 2 302 262
- GB-A- 481 413
- US-A- 2 715 341

## Beschreibung

Die vorliegende Erfindung betrifft eine Verstellvorrichtung für das Fahrwerk eines Fahrzeugs, umfassend mindestens eine Spindel, welche Spindel ein Gewinde aufweist. Die Verstellvorrichtung umfasst weiterhin eine Spindelmutter, welche auf das Gewinde schraubbar ist, und mindestens ein erstes und ein zweites Anschlagmittel, welche Anschlagmittel jeweils mindestens eine Anschlagfläche aufweisen und derart angeordnet und dazu ausgebildet sind, in einer Anschlagstellung die Axialbewegung zwischen Spindel und Spindelmutter relativ zueinander zu begrenzen. Die Erfindung betrifft weiterhin das Fahrwerk eines Fahrzeugs, umfassend die erfindungsgemäße Verstellvorrichtung.

Ein Ziel von Fahrwerksentwicklungen ist es, kostengünstige Verstellvorrichtungen zur Verfügung zu stellen, welche bei einem Ausfall der Elektronik ausreichend robust sind.

Aus dem Stand der Technik sind bereits Verstellvorrichtungen bekannt, welche bei einem Ausfall der Elektronik in einen mechanischen Anschlag fahren. Dieser mechanische Anschlag ist im Stand der Technik als Axialanschlag ausgebildet, d.h. die Anschlagflächen stehen in der Anschlagstellung in Axialrichtung der Spindel miteinander in Anlage.

Alternativ ist es aus dem Stand der Technik bekannt, Sperren zu verwenden, welche jedoch sehr kostspielig sind und einen hohen Ruhestrom- bzw. Energiebedarf haben.

Aus der EP 1 911 660 A1 ist ein Aktuator für die Lenkung einer Hinterradachse bekannt, welcher eine Spindel und eine Spindelmutter aufweist, wobei die Spindelmutter auf das Gewinde der Spindel aufgeschraubt ist. Der Anschlag ist als Axialanschlag ausgebildet, welcher den Nachteil aufweist, dass es bei einem Ausfall der Elektronik leicht zu einem Verkanten kommt. Die Spindelmutter wird hier durch eine spezielle Ausführungsform eines Rotors des Aktuators an einem Verkanten gehindert.

Eine weitere Verstellvorrichtung mit den Merkmalen des Oberbegriffs des Anspruchs 1 ist aus der US2,715,341 bekannt.

Der vorliegenden Erfindung liegt die Aufgabe zugrunde, eine Verstellvorrichtung aus dem Stand der Technik dahingehend weiterzuentwickeln, dass die Verstellvorrichtung bei einem Ausfall der Elektronik nicht verkantet und sich leicht wieder aus der Anschlagstellung herausbewegen lässt.

Gelöst ist diese Aufgabe durch eine Verstellvorrichtung für das Fahrwerk eines Fahrzeugs gemäß Anspruch 1 und durch ein Fahrwerk eines Fahrzeugs gemäß Anspruch 12. Vorteilhafte Weiterbildungen der erfindungsgemäßen Verstellvorrichtung finden sich in den Unteransprüchen 2 bis 11, eine vorteilhafte Weiterbildung des erfindungsgemäßen Fahrwerks in dem Unteranspruch 13. Hiermit wird der Wortlaut dieser Unteransprüche durch ausdrückliche Bezugnahme in die Beschreibung aufgenommen, um Textwiederholungen zu vermeiden.

Die erfindungsgemäße Verstellvorrichtung für das Fahrzeug eines Fahrzeugs umfasst mindestens eine Spindel, welche Spindel ein Gewinde aufweist, weiterhin umfassend eine Spindelmutter, welche auf das Gewinde schraubbar ist, und mindestens ein erstes und ein zweites Anschlagmittel, welche Anschlagmittel jeweils mindestens eine Anschlagfläche aufweisen und derart angeordnet und dazu ausgebildet sind, in einer Anschlagstellung die Axialbewegung von Spindel und Spindelmutter relativ zueinander zu begrenzen. Die Verstellvorrichtung zeichnet sich dadurch aus, dass das erste Anschlagmittel an der Spindelmutter und das zweite Anschlagmittel an der Spindel angeordnet ist, wobei die Anschlagmittel derart angeordnet sind, dass die Anschlagflächen in der Anschlagstellung in Richtung einer relativen Drehbewegung zwischen Spindel und Spindelmutter in Anlage stehen, wobei mindestens ein Anschlagsmittel, vorzugsweise das zweite Anschlagsmittel, in axialer Richtung verschiebbar ausgebildet ist.

Die Anschlagflächen der Anschlagmittel stehen folglich in der Anschlagstellung in Richtung einer Drehbewegung zwischen Spindel und Spindelmutter miteinander in Anlage. Vorteilhaft hierbei ist, dass kein Verkanten auftritt. Dies ermöglicht einen sicheren Betrieb der Verstellvorrichtung auch im Falle eines Ausfalls der Elektronik. Weiterhin kann auf zusätzliche Maßnahmen, beispielsweise in Form von kostspieligen Sperren, verzichtet werden, weil der Axialanschlag durch einen Anschlag in Richtung der Drehbewegung von Spindel und Spindelmutter ersetzt wird. Weiterhin bietet dies den Vorteil, dass es zu keinem Verklemmen in axialer Richtung kommen kann, da das Anschlagmittel axial nachgiebig ausgebildet ist. Ein kostspieliger Austausch des Gesamtsystems, welcher in Folge einer axialen Verklemmung erforderlich wäre, wird vermieden.

Vorteilhafterweise erstrecken sich die Anschlagflächen in Radialrichtung der Spindel, d. h. die (Anschlagflächen der Anschlagmittel enthalten jeweils einen Radius (Radiusvektor)). Im Vergleich mit dem vorbekannten Stand der Technik, welcher axiale Anschläge umfasst, wird somit eine konstruktiv einfache, alternative Lösung vorgeschlagen, welche den oben beschriebenen Nachteil des häufigen Verkantens von axialen Anschlägen überwindet.

Eine vorteilhafte Ausgestaltung der erfindungsgemäßen Verstellvorrichtung sieht vor, dass die Anschlagflächen parallel zu der Drehachse, der Spindel bzw. Spindelmutter stehen, d.h. die Anschlagflächen werden von der Drehachse (Vektor in Axialrichtung) nicht durchsetzt. Die Ausrichtung der Anschlagflächen parallel zur Drehachse bewirkt ebenfalls eine Abgrenzung zum Stand der Technik, bei welchem die Anschlagflächen im Wesentlichen senkrecht zur Drehachse orientiert sind, was den Nachteil eines leichten Verkantens bedingt.

Eine bevorzugte Ausführungsform der erfindungsgemäßen Verstellvorrichtung zeichnet sich dadurch aus, dass mindestens eines der Anschlagmittel zusätzlich zu der Anschlagfläche eine in einer Drehrichtung ansteigende Rampenfläche aufweist. Dabei kann mindestens ein Anschlagmittel eine Nase umfassen, welche Nase durch die Anschlagfläche und die Rampenfläche begrenzt ist. Die Anschlagfläche, welche die Nase auf einer Seite begrenzt, ist gemäß einer vorstehend beschriebenen Ausführungsform idealerweise parallel zur Drehachse und/oder in Radialrichtung angeordnet. Die in der Drehrichtung ansteigend ausgebildete Rampenfläche erleichtert ein Losdrehen der Spindelmutter, in entgegengesetzter Drehrichtung aus der Anschlagstellung.

Vorteilhafterweise weist die Rampenfläche einen Anstiegswinkel aus, der kleiner als 45°, vorzugsweise kleiner als 35°, höchst vorzugsweise kleiner als 25°, ist. Entscheidend ist, dass der Winkel klein genug gewählt wird, so dass sich die Spindelmutter losdrehen lässt.

Eine bevorzugte Ausführungsform der erfindungsgemäßen Verstellvorrichtung sieht vor, dass die Rampenfläche und die Anschlagfläche einen Winkel kleiner 90° und größer 45°, vorzugsweise größer 50°, höchst vorzugsweise größer 65°, einschließen, welcher Winkel zu dem oben genannten Anstiegswinkel komplementär ist. Da die Anschlagfläche vorteilhafterweise parallel zur Drehachse ausgerichtet ist, wird der Anstiegswinkel der Rampenfläche möglichst klein, je größer der Winkel β zwischen der Rampenfläche und der Anschlagsfläche gewählt wird, da sich der Winkel β ergibt aus 90° abzüglich dem Wert des Winkels α.

Eine bevorzugte Ausführungsform sieht ein Rückstellmittel für das axial verschiebbare Anschlagmittel vor, welches Rückstellmittel vorzugsweise als Federelement, insbesondere umfassend eine Druckfeder, ausgebildet ist. Hierdurch wird eine einfache Konstruktion mit Bauelementen realisiert, die in einer Vielzahl verschiedener Ausführungsformen erhältlich und kostengünstig sind. Das Rückstellmittel sorgt einerseits dafür, dass das betreffende Anschlagmittel nach Einwirkung des anderen Anschlagmittels wieder seine definierte Ausgangsstellung einnimmt. Es verhindert ein Verklemmen, da durch das Rückstellmittel eine axiale Nachgiebigkeit beim Zusammenwirken der der Anschlagmittel realisiert ist.

Eine bevorzugte Ausführungsform sieht vor, dass das axial verschiebbare Anschlagmittel die Spindel nach Art einer Hülse umgreift und ein axial und/oder radial vorspringendes Element, insbesondere eine Nase, zum Ausbilden der Anschlagfläche aufweist. Hierdurch wird eine einfache und kostengünstige Konstruktion realisiert, welche ein axial nachgiebiges und gleichzeitig als Anschlag fungierendes Anschlagmittel bereitstellt. Das axial vorspringende Element dient einerseits dazu, bei einem Losdrehen der Spindelmutter ein Verkanten zu verhindern, indem es in axialer Richtung dem Widerstand ausweicht. Andererseits dient es als Anschlagmittel in der Anschlagsposition, um die Drehbewegung der Spindel und der Spindelmutter relativ zueinander zu begrenzen. Auch im Falle des Einwirkens einer axialen Kraft bei einem Zudrehen der Spindelmutter gibt das genannte Anschlagmittel nach, so dass es leicht zurückweichen kann, bis sich die Anschlagflächen in die Anschlagstellung gedreht haben.

Eine alternative bevorzugte Ausführungsform der erfindungsgemäßen Verstellvorrichtung sieht vor, dass die Verstellvorrichtung eine an der Spindel oder an der Spindelmutter angeordnete Aufnahme für das in axialer Richtung verschiebbare Anschlagmittel aufweist, welches Anschlagmittel als gegen eine Rückstellkraft als axial verschiebbarer Stift ausgebildet ist. Dabei kann die Aufnahme ein Rückstellmittel, insbesondere ein Federelement, zum Erzeugen der Rückstellkraft umfassen. Eine solche Ausführungsform bietet eine konstruktiv einfach zu realisierende Variante zu der weiter oben beschriebenen Ausführungsform. Der axial verschiebbare Stift hat ebenfalls zwei Funktionen; einerseits weicht er bei einem Kontakt mit dem Anschlagmittel der Spindelmutter aus, insbesondere beim Losdrehen (Kontakt mit der Rampenfläche), wie oben beschrieben, andererseits dient er als Anschlagfläche in Drehrichtung bzw. Umfangsrichtung zum Begrenzen der Drehbewegung der Spindel und der Spindelmutter relativ zueinander.

Vorteilhafterweise ist das Gewinde der Spindel als Trapezgewinde ausgebildet. Die Erfindung ist grundsätzlich nicht auf die Ausführung des Gewindes als Trapezgewinde beschränkt, jedoch erwies sich Untersuchungen der Anmelderin zufolge eine Ausführung des Gewindes nach Art eines Trapezgewindes als besonders vorteilhaft für den beabsichtigten Anwendungsbereich der Verstellvorrichtung.

Eine bevorzugte Ausführungsform der erfindungsgemäßen Verstellvorrichtung ist dadurch gekennzeichnet, dass die Verstellvorrichtung als Lenker oder Teil eines Lenkers für das Fahrwerk des Fahrzeugs ausgebildet ist. Aufgrund des erfindungsgemäß vermiedenen Verkantens eignet sich Untersuchungen der Anmelderin zufolge die erfindungsgemäße Verstellvorrichtung insbesondere für den Einsatz bei Lenkern und Lenkerteilen eines Fahrzeugs.

Das erfindungsgemäße Fahrwerk eines Fahrzeugs umfasst die vorstehend beschriebene Verstellvorrichtung. Vorteilhafterweise zeichnet sich das Fahrwerk dadurch aus, dass die Verstellvorrichtung Teil einer Hinterradlenkung des Fahrwerks ist, so dass durch die Verstellvorrichtung die Änderung des Lenkwinkels an der Hinterachse möglich ist. Die Vorrichtung kann aber auch an der Vorderachse zur dortigen Änderung des Lenkwinkels zum Einsatz gelangen. Wenn die Verstellvorrichtung als Lenker oder Teil eines Lenkers für das Fahrwerk des Fahrzeugs ausgebildet ist kann diese mit einem Radlager zusammenwirken und somit die Verstellung des jeweiligen Rades oder auch beider Räder bewirken. Die Verbindung zwischen der Vorrichtung und mindestens einem Radlager ist über geeignete Gelenke, vorzugsweise Kugelgelenke ausgebildet.

Weitere Vorteile und Eigenschaften der vorliegenden Erfindung werden im Folgenden anhand von Ausführungsbeispielen und den Figuren erläutert. Dabei zeigt:
Figur 1 eine Detailansicht einer erfindungsgemäßen Verstellvorrichtung im Bereich der Anschlagmittel;
Figur 2 eine Detailansicht einer alternativen Ausführung einer erfindungsgemäßen Verstellvorrichtung im Bereich der Anschlagmittel;
Figur 3 die erfindungsgemäße Verstellvorrichtung gemäß den Figuren 1 und 2 in einer perspektivischen Ansicht;
Figur 4 eine Seitenansicht der erfindungsgemäßen Verstellvorrichtung gemäß Figur 3;
Figur 5 eine Schnittansicht der erfindungsgemäßen Verstellvorrichtung gemäß Figur 4;
Figur 6 eine Schnittansicht der Detailansicht der erfindungsgemäßen Verstellvorrichtung gemäß Figur 1 ;
Figur 7a eine schematische Darstellung zur Erläuterung der Funktion der erfindungsgemäßen Verstellvorrichtung gemäß Figur 1 in einer Seitenansicht;
Figur 7b eine vergrößerte Ansicht des Anschlagmittels aus Figur 7a in der Schnittebene A-A;
Figur 8 eine Schnittansicht der Detailansicht der erfindungsgemäßen Verstellvorrichtung gemäß Figur 2;
Figur 9 eine schematische Darstellung zur Erläuterung der Funktion der erfindungsgemäßen Verstellvorrichtung gemäß Figur 2 in einer Seitenansicht;
Figur 10 eine alternative Ausführungsform der erfindungsgemäßen Verstellvorrichtung gemäß Figur 1 in einer perspektivischen Ansicht.

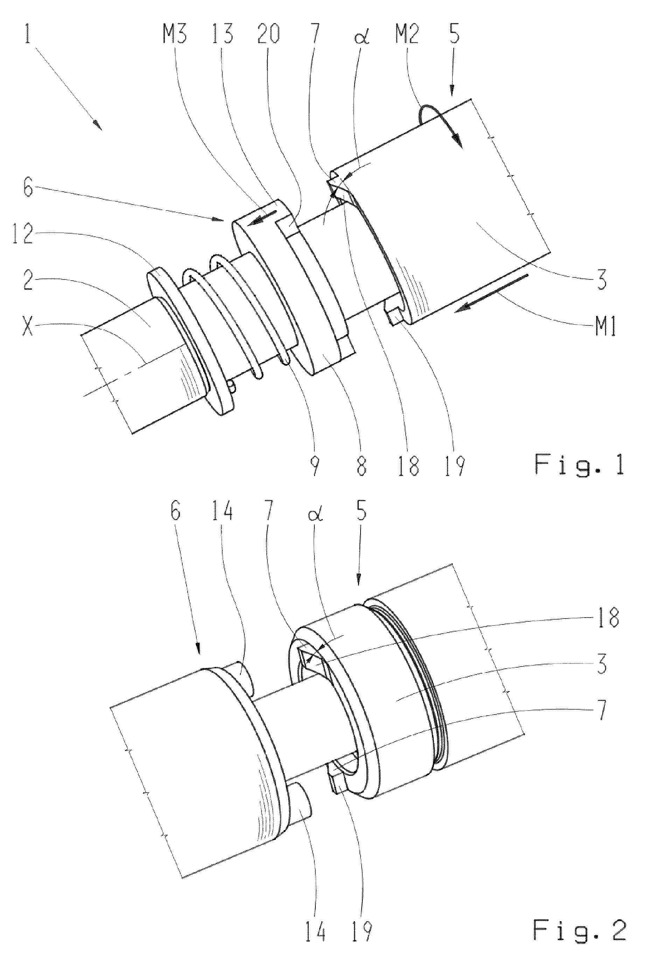

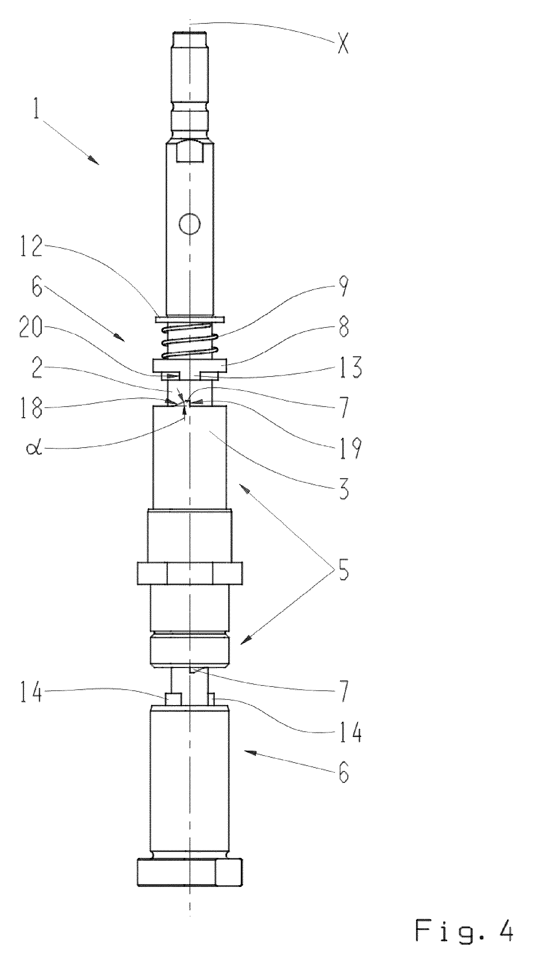

Die Figuren 1-5 zeigen verschiedene Detaildarstellungen einer erfindungsgemäßen Verstellvorrichtung und werden im Folgenden gemeinsam beschrieben.

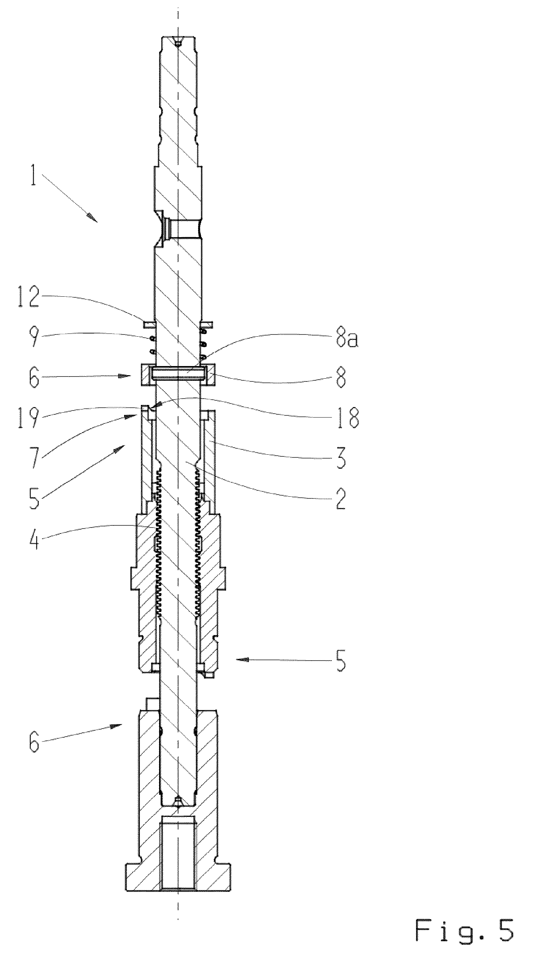

Figur 1 zeigt im Detail eine Verstellvorrichtung 1, welche eine Spindel 2 und eine Spindelmutter 3 aufweist. Die Spindel 2 weist zumindest in einem Teilbereich ein außenliegendes Gewinde 4 auf (siehe Figur 5). Auf dieses Gewinde 4 ist die Spindelmutter 3 aufgeschraubt.

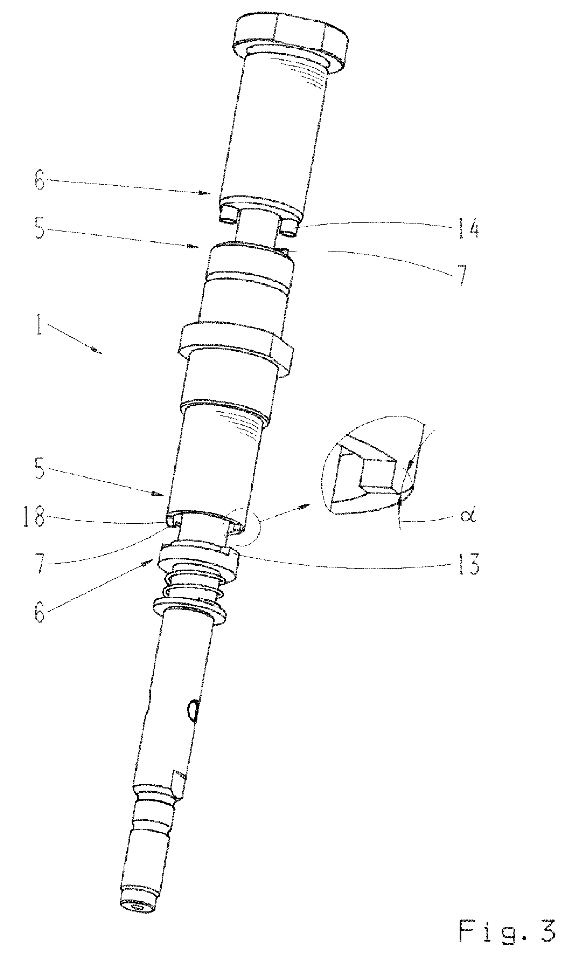

Zum Begrenzen der axialen Bewegung von Spindel 2 und Spindelmutter 3 relativ zueinander und entlang der Spindelachse X ist an der Spindelmutter 3 an beiden Enden jeweils ein erstes Anschlagmittel 5 und an der Spindel 2 zu beiden Seiten der Spindelmutter 3 jeweils ein zweites Anschlagmittel 6 angeordnet (siehe Figuren 3-5).

Gemäß Figur 1 weist das erste Anschlagmittel 5 eine in Axialrichtung X der Spindel 2 vorspringende Nase 7 auf. Die Nase 7 weist eine zur Drehrichtung der Spindelmutter 3 gemäß dem Pfeil M2 senkrechte Anschlagfläche 19 auf. Senkrecht zur Drehrichtung bedeutet senkrecht bezüglich einer Tangente an den Pfeil M2. Eine andere Begrenzungsfläche der Nase 7 ist gebildet durch eine Rampenfläche 18. Die Rampenfläche 18 ist unter einem Winkel α bezüglich einer Stirnseite der Spindelmutter 3 ausgebildet. Die senkrechte Anschlagfläche 19 dient zum Begrenzen der Drehbewegung von Spindelmutter 3 und Spindel 2 relativ zueinander und steht in der Anschlagstellung in Anlage mit einer Anschlagfläche 20 des zweiten Anschlagmittels 6, worauf nachfolgend genauer eingegangen wird.

Das zweite Anschlagmittel 6 umfasst ein senkrecht zur Spindelachse X orientiertes ring- oder hülsenartiges Element 8 mit einer Nase 13 und ein Federelement 9. Die Nase 13 weist seitlich, senkrecht zur Drehrichtung M2 (s. o.) die erwähnte Anschlagfläche 20 auf, mit der die Nase 7 bzw. die Anschlagfläche 19 in der Anschlagstellung in Anlage tritt. Das Federelement 9 ist zwischen dem ring- oder schellenartigen Element 8 und einem Hohlspannstift 12 angeordnet, der ein Widerlager bildet. Die Nase 13 bzw. das ganze ring- oder hülsenartige Element 8 kann durch die Anordnung des Federelementes 9 axial ausweichen, was insbesondere bei einem Losdrehen der Spindelmutter 3 von Vorteil ist, da so kein Verkanten auftritt.

Bei einem Schrauben der Spindelmutter 3 gemäß Drehrichtung M2 auf das Gewinde 4 der Spindel 2 in Richtung des Pfeils M1 bewegen sich das erste Anschlagmittel 5 und das zweite Anschlagmittel 6 aufeinander zu. In einer Anschlagstellung stehen dann die Nase 7 des ersten Anschlagmittels 5 in Umfangs- bzw. Drehrichtung mit ihrer Anschlagfläche 19 in Anlage mit der Nase 13 des ring- oder hülsenartigen Elementes 8 des zweiten Anschlagmittels 6 bzw. mit dessen Anschlagfläche 20.

Bei einem Losdrehen entgegen der Richtung des Pfeils M2 wird das Lösen der Spindelmutter 3 aufgrund der abgeschrägten Rampenfläche 18 der Nase 7 in Kombination mit dem mittels des Federelementes 9 axial nachgiebig ausgestalteten ring- oder schellenartigen Element 8 erleichtert und ein Verkanten verhindert. Bei einem Lösen der Spindelmutter 3 aus der Anschlagstellung, erleichtert die abgeschrägte Rampenfläche 18 das Losdrehen, indem sie ermöglicht, dass sich die Nase 7 leicht an der Nase 13 vorbeibewegt und dabei eine axiale Kraft auf das Anschlagmittel 6 ausübt, damit dieses ein wenig zurückweicht.

Die Nase 13 des ring- oder schellenartigen Elementes 8 begrenzt folglich in Richtung M2 die Drehbewegung von Spindel 2 und Spindelmutter 3; In entgegengesetzter Drehrichtung weicht sie beim Zusammenwirken mit der Rampenfläche 18 entgegen der Rückstellkraft des Federelementes 9 in Richtung des Pfeils M3 aus.

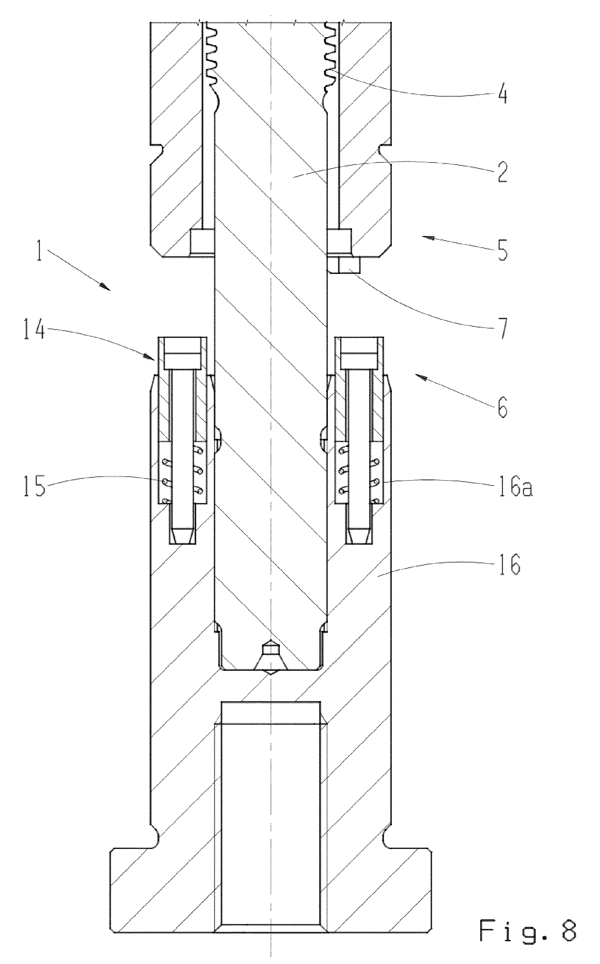

Figur 2 zeigt eine alternative Ausgestaltung des zweiten Anschlagmittels 6, ansonsten entsprechen die Anordnung und Funktion derjenigen aus Figur 1. Das zweite Anschlagmittel 6 weist bei dieser Ausführungsform anstelle der Nase 13 gemäß Figur 1 zwei Stifte 14 auf. Die Funktionsweise dieser Ausgestaltung des zweiten Anschlagmittels 6 wird weiter unten anhand von Figur 8 erläutert.

Die Figuren 3-5 zeigen die relative Anordnung der Elemente aus den Detaildarstellungen gemäß Figur 1 und Figur 2. Die Spindel 2 weist demnach an beiden Enden jeweils ein erstes Anschlagmittel 5 und ein zweites Anschlagmittel 6 auf. Eines der beiden zweiten Anschlagmittel 6 entspricht der Ausführungsform aus Figur 1, und das andere der beiden zweiten Anschlagmittel 6 entspricht der Ausführungsform aus Figur 2.

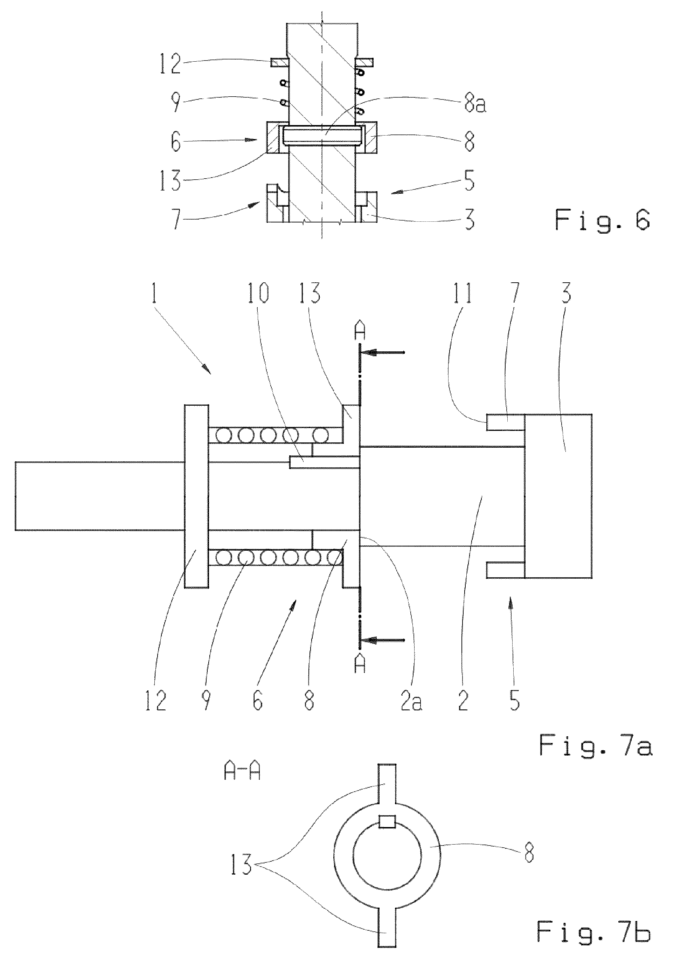

Figur 6 zeigt einen Schnitt durch die Detailansicht der erfindungsgemäßen Verstellvorrichtung gemäß Figur 1. Das ring- oder hülsenartige Element 8 liegt bei maximaler Längung der Felder 9 in seiner Grundstellung an der Schulter eines weiteren Elementes 8a an, welches Element 8a fest mit der Spindel 2 verbunden ist. Die dem Element 8 zugewandten Stirnfläche des weiteren Elementes 8a legt eine Maximalposition des ring- oder hülsenartigen Elementes 8 in Richtung der Spindelmutter 3 fest. Sowohl das ring- oder hülsenartige Element 8 als auch ein Hohlspannstift 12 begrenzen die Lage des Federelementes 9.

Figur 7a zeigt schematisch eine alternative Ausführung des zweiten Anschlagmittels 6 aus Figur 6. In dieser Ausführungsform ist das ring- oder hülsenartige Element 8 mittels einer Passfeder 10 verdrehsicher an der Spindel 2 angeordnet. In Axialrichtung und in Richtung zu der Spindelmutter 3 steht das ring- oder hülsenartige Element 8 in der gezeigten Grundstellung mit einer Schulter 2a der Spindel 2 in Anlage und weist demzufolge eine definierte Axialposition (die Grundstellung) auf.

Figur 7b zeigt eine vergrößerte Darstellung des ring- oder hülsenartigen Elementes 8 aus Figur 2a entlang der Schnittlinie A-A. Das ring- oder hülsenartige Element 8 weist demnach zwei Nasen 13 an diametral gegenüberliegenden Umfangspositionen auf.

Die Nasen 13 des zweiten Anschlagmittels 6 stehen in einer Anschlagstellung in Umfangs- bzw. Drehrichtung mit zwei Nasen 7 des ersten Anschlagmittels 5 in Anlage. Wirkt eine axiale Kraft auf die Nasen 13 ein, so geben diese zusammen mit dem federnd gelagerten Element 8 aufgrund eines Zusammendrückens des Federelementes 9 in axialer Richtung nach. Wirkt keine Kraft mehr in axialer Richtung auf die Nasen 13 des ring- oder hülsenartigen Elements 8, bewirkt die Rückstellkraft des Federelementes 9, dass sich das ganze ring- oder schellenartige Element 8 in seine Ausgangsposition (Grundstellung) zurückschiebt.

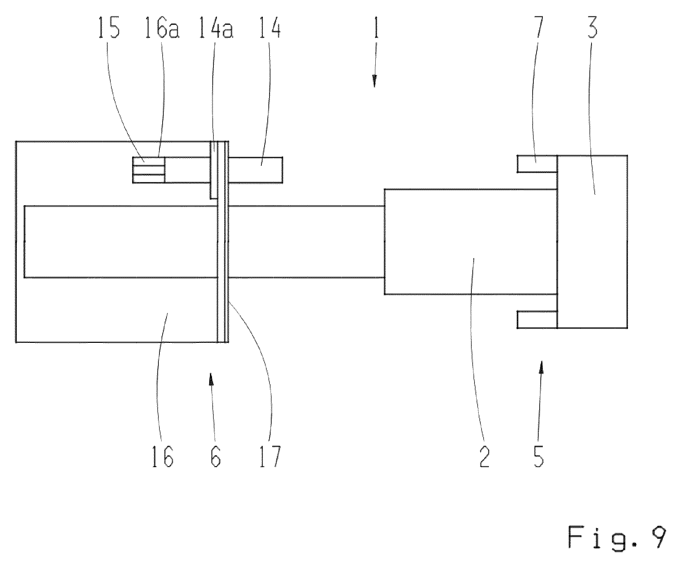

Die Figuren 8 und 9 zeigen alternative Ausführungsformen des zweiten Anschlagmittels gemäß Figur 2. Das zweite Anschlagmittel 6 umfasst wenigstens einen Stift 14 (zwei in Figur 8, eine in Figur 9), welcher mittels eines zugehörigen Federelements 15 axial verschiebbar ausgebildet ist. Das Federelement 15 und ein Teil des Stifts 14 sind in einer Aufnahme 16a nach Art eines Sacklochs verdrehsicher an der Spindel 2 angeordnet, welche Aufnahme 16a in einem Gehäuse 16 ausgebildet ist. Das Gehäuse 16 ist gemäß Figur 9 mit einem Deckel 17 versehen, wobei der Deckel 17 eine (nicht bezeichnete) Öffnung für den aus dem Gehäuse 16 herausragenden Teil des Stiftes 14 aufweist. Der Stift 14 hat zumindest gemäß Figur 9 eine radial vorspringende Struktur 14a zum Begrenzen des maximalen Herausragens des Stiftes 14 aus dem Gehäuse 16. Dies entspricht der oben beschriebenen Grundstellung.

Der Stift 14 hat zwei Funktionen: Einerseits dient er bei einem Schrauben der Spindelmutter 3 auf das Gewinde 4 der Spindel 2 zum Begrenzen der Drehbewegung von Spindel 2 und Spindelmutter 3 relativ zueinander, wenn Stift 14 und Nase 7 seitlich in Anlage treten. Andererseits ist der Stift 14 derart ausgebildet, dass er bei einem Einwirken einer axialen Kraft beim Zusammenwirken mit der Rampenfläche 18 (vgl. Figur 2) axial verschiebbar ist und ausweicht, was insbesondere das Lösen der Spindelmutter 3 erleichtert. Wirkt keine axiale Kraft mehr ein so bewirkt die Rückstellkraft des Federelementes 15, dass sich der Stift 14 in seine Ausgangsposition zurückschiebt.

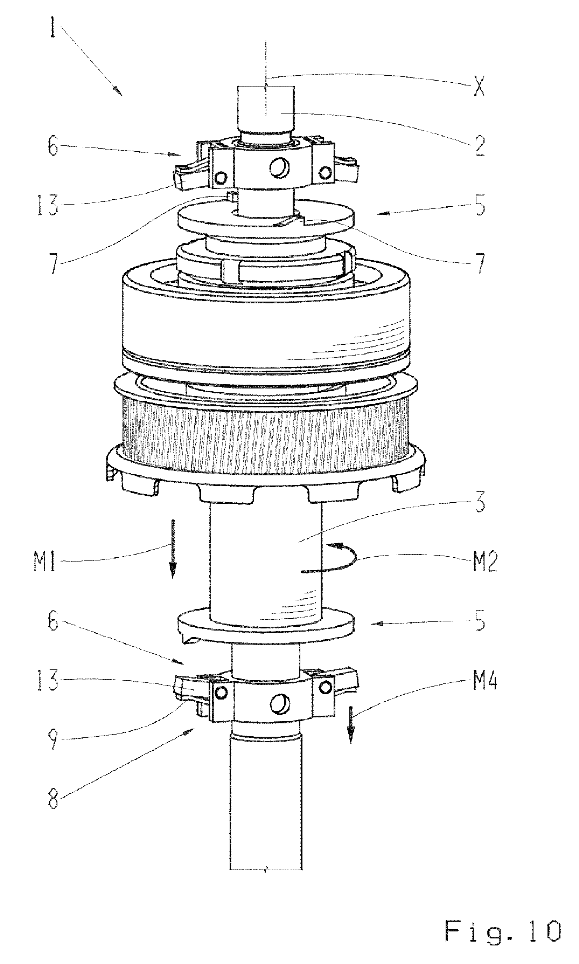

Figur 10 zeigt eine alternative Ausführungsform der erfindungsgemäßen Verstellvorrichtung gemäß Figur 1. Die Verstellvorrichtung 1 weist alternativ zu den vorstehenden Ausführungsformen der Verstellvorrichtungen an beiden Spindelenden ein besonderes zweites Anschlagmittel 6 auf, welches nach Art eines ring- oder schellenartigen Elementes 8 ausgebildet ist. Die Nasen 13 dieses ring- oder schellenartigen Elementes 8 sind mit Schwenkachse quer zur Spindelachse X derart ausgebildet, dass sie bei einem Einwirken einer axialen Kraft entgegen der Wirkung eines Federelementes 9 in Richtung insbesondere des Pfeils M4 nach außen abkippen, wohingegen die Nasen in den vorstehend beschriebenen Ausführungsformen stets axial in Richtung der Spindelachse X verschiebbar ausgebildet sind.

### Bezugszeichen

- 1: Verstellvorrichtung
- 2: Spindel
- 2a: Schulter
- 3: Spindelmutter
- 4: Gewinde
- 5: Erstes Anschlagmittel
- 6: Zweites Anschlagmittel
- 7: Nase
- 8: ring-/hülsenförmiges Element
- 8a: Element
- 9: Federelement
- 10: Passfeder
- 11: Anschlagfläche
- 12: Hohlspannstift
- 13: Zapfen
- 14: Stift
- 14a: vorspringende Struktur
- 15: Federelement
- 16: Gehäuse
- 16a: Aufnahme
- 17: Deckel
- 18: Rampenfläche
- 19: Anschlagfläche
- 20: Anschlagfläche
- α: Anstiegswinkel
- M1: Bewegungsrichtung
- M2: Bewegungsrichtung
- M3: Bewegungsrichtung
- M4: Bewegungsrichtung
- X: Achse

## Patentansprüche

1. Verstellvorrichtung (1) für das Fahrwerk eines Fahrzeugs, umfassend mindestens eine Spindel (2), welche Spindel (2) ein Gewinde (4) aufweist, weiterhin umfassend eine Spindelmutter (3), welche auf das Gewinde (4) schraubbar ist, und mindestens ein erstes und ein zweites Anschlagmittel (5, 6), welche Anschlagmittel (5, 6) jeweils mindestens eine Anschlagfläche (19, 20) aufweisen und derart angeordnet und dazu ausgebildet sind, Gn einer Anschlagstellung die Axialbewegung von Spindel (2) und Spindelmutter (3) relativ zueinander zu begrenzen, wobei das erste Anschlagmittel (5) an der Spindelmutter (3) und das zweite Anschlagmittel (6) an der Spindel (2) angeordnet ist, wobei die Anschlagmittel (5, 6) derart angeordnet sind, dass die Anschlagflächen (19, 20) in der Anschlagstellung in Richtung einer relativen Drehbewegung zwischen Spindel (2) und Spindelmutter (3) in Anlage stehen, **dadurch gekennzeichnet, dass**
mindestens eines der Anschlagmittel (5, 6) vorzugsweise das zweite Anschlagmittel (6), in axialer Richtung verschiebbar ausgebildet ist.

2. Verstellvorrichtung (1) nach Anspruch 1, **gekennzeichnet durch** ein Rückstellmittel für das axial verschiebbare Anschlagmittel (6), welches Rückstellmittel vorzugsweise als Federelement (9), insbesondere umfassend eine Druckfeder ausgebildet ist.

3. Verstellvorrichtung (1) nach Anspruch 1 oder 2, **dadurch gekennzeichnet, dass** das axial verschiebbare Anschlagmittel (6) die Spindel (2) nach Art einer Hülse (8) umgreift und ein axial und/oder radial vorspringendes Element (13), insbesondere eine Nase, zum Ausbilden der Anschlagfläche (20) aufweist.

4. Verstellvorrichtung (1) zumindest nach Anspruch 1 oder 2, **dadurch gekennzeichnet, dass** die Verstellvorrichtung eine an der Spindel (2) oder an der Spindelmutter (3) angeordnete Aufnahme (16, 16a) für das in axialer Richtung verschiebbare Anschlagmittel (6) aufweist, welches Anschlagmittel (6) als gegen eine Rückstellkraft axial verschiebbarer Stift (14) ausgebildet ist, vorzugsweise, dass die Aufnahme ein Rückstellmittel, insbesondere ein Federelement (15), zum Erzeugen der Rückstellkraft umfasst.

5. Verstellvorrichtung (1) nach einem der vorergehenden Ansprüche, **dadurch gekennzeichnet, dass** die Anschlagflächen (19, 20) sich in Radikalrichtung der Spindel (2) erstrecken.

6. Verstellvorrichtung (1) nach mindestens einem der vorangegangenen Ansprüche, **dadurch gekennzeichnet, dass** die Anschlagflächen (19, 20) parallel zur Drehachse (X) stehen.

7. Verstellvorrichtung (1) nach mindestens einem der vorangegangenen Ansprüche, **dadurch gekennzeichnet, dass** mindestens eines der Anschlagmittel (5) zusätzlich zu der Anschlagfläche (19) eine in einer Drehrichtung ansteigende Rampenfläche (18) aufweist, insbesondere, dass das mindestens eine Anschlagmittel (5) eine Nase (7) umfasst, welche Nase (7) durch Anschlagfläche (19) und Rampenfläche (18) begrenzt ist.

8. Verstellvorrichtung (1) nach Anspruch 7, **dadurch gekennzeichnet, dass** die Rampenfläche (18) einen Anstiegswinkel (α) kleiner als 45°, vorzugsweise kleiner als 35°, höchst vorzugsweise kleiner als 25°, aufweist.

9. Verstellvorrichtung (1) nach Anspruch 7 oder 8, **dadurch gekennzeichnet, dass** die Rampenfläche (18) und die Anschlagsfläche (19) einen Winkel (α) kleiner 90° und größer 45°, vorzugsweise größer 5 5°, höchst vorzugsweise größer 65°, einschließen.

10. Verstellvorrichtung (1) nach mindestens einem der vorangegangenen Ansprüche, **dadurch gekennzeichnet, dass** das Gewinde (4) der Spindel (2) als Trapezgewinde ausgebildet ist.

11. Verstellvorrichtung (1) nach mindestens einem der vorangegangenen Ansprüche, **dadurch gekennzeichnet, dass** die Verstellvorrichtung (1) als Lenker oder Teil eines Lenkers für das Fahrwerk des Fahrzeugs ausgebildet ist.

12. Fahrwerk eines Fahrzeugs umfassend die Verstellvorrichtung (1) nach einem der vorangegangenen Ansprüche.

13. Fahrwerk nach Anspruch 12, **dadurch gekennzeichnet, dass** die Verstellvorrichtung (1) Teil einer Hinterradlenkung des Fahrwerks ist.

## Claims

1. Adjustment device (1) for a vehicle chassis, comprising at least one spindle (2), which spindle (2) has a thread (4), furthermore comprising a spindle nut (3) which is screwable onto the thread (4), and at least one first and one second stop means (5, 6), which stop means (5, 6) each have at least one stop surface (19, 20) and are arranged and configured so as, in a stop position, to limit the axial movement of spindle (2) and spindle nut (3) relative to each other, wherein the first stop means (5) is arranged on the spindle nut (3) and the second stop means (6) is arranged on the spindle (2), wherein the stop means (5, 6) are arranged in such a manner that, in the stop position, the stop surfaces (19, 20) are in contact in the direction of a relative rotational movement between spindle (2) and spindle nut (3), **characterized in that** at least one of the stop means (5, 6), preferably the second stop means (6), is configured so as to be displaceable in the axial direction.

2. Adjustment device (1) according to Claim 1, **characterized by** a restoring means for the axially displaceable stop means (6), which restoring means is preferably configured as a spring element (9), in particular comprising a compression spring.

3. Adjustment device (1) according to Claim 1 or 2, **characterized in that** the axially displaceable stop means (6) embraces the spindle (2) in the manner of a sleeve (8) and has an axially and/or radially projecting element (13), in particular a lug, for forming the stop surface (20).

4. Adjustment device (1) at least according to Claim 1 or 2, **characterized in that** the adjustment device has a receptacle (16, 16a), which is arranged on the spindle (2) or on the spindle nut (3), for the stop means (6) which is displaceable in the axial direction, which stop means (6) is configured as a pin (14) which is axially displaceable counter to a restoring force, preferably **in that** the receptacle comprises a restoring means, in particular a spring element (15), for producing the restoring force.

5. Adjustment device (1) according to one of the preceding claims, **characterized in that** the stop surfaces (19, 20) extend in the radial direction of the spindle (2).

6. Adjustment device (1) according to at least one of the preceding claims, **characterized in that** the stop surfaces (19, 20) are parallel to the axis of rotation (X).

7. Adjustment device (1) according to at least one of the preceding claims, **characterized in that** at least one of the stop means (5) has, in addition to the stop surface (19), a ramp surface (18) rising in a direction of rotation, in particular **in that** the at least one stop means (5) comprises a lug (7), which lug (7) is bounded by stop surface (19) and ramp surface (18).

8. Adjustment device (1) according to Claim 7, **characterized in that** the ramp surface (18) has an angle of ascent (α) of smaller than 45°, preferably smaller than 35°, at most preferably smaller than 25°.

9. Adjustment device (1) according to Claim 7 or 8, **characterized in that** the ramp surface (18) and the stop surface (19) enclose an angle (α) of smaller than 90° and larger than 45°, preferably larger than 55°, at most preferably larger than 65°.

10. Adjustment device (1) according to at least one of the preceding claims, **characterized in that** the thread (4) of the spindle (2) is configured as a trapezoidal thread.

11. Adjustment device (1) according to at least one of the preceding claims, **characterized in that** the adjustment device (1) is configured as a link or part of a link for the vehicle chassis.

12. Vehicle chassis comprising the adjustment device (1) according to one of the preceding claims.

13. Chassis according to Claim 12, **characterized in that** the adjustment device (1) is part of a rear wheel steering system of the chassis.

## Revendications

1. Dispositif de réglage (1) pour le châssis d'un véhicule automobile, comprenant au moins une broche (2), laquelle broche (2) présente un filetage (4), comprenant en outre un écrou de broche (3) qui peut être vissé sur le filetage (4) et au moins un premier et un deuxième moyen de butée (5, 6), lesquels moyens de butée (5, 6) présentent chacun au moins une surface de butée (19, 20) et sont disposés et réalisés de manière à limiter, dans une position de butée, le mouvement axial de la broche (2) et de l'écrou de broche (3) l'un par rapport à l'autre, le premier moyen de butée (5) étant disposé sur l'écrou de broche (3) et le deuxième moyen de butée (6) étant disposé sur la broche (2), les moyens de butée (5, 6) étant disposés de telle sorte que les surfaces de butée (19, 20) soient en appui dans la position de butée dans la direction d'un mouvement de rotation relatif entre la broche (2) et l'écrou de broche (3), **caractérisé en ce que**
au moins l'un des moyens de butée (5, 6), de préférence le deuxième moyen de butée (6), est réalisé de manière déplaçable dans la direction axiale.

2. Dispositif de réglage (1) selon la revendication 1, **caractérisé par** un moyen de rappel pour le moyen de butée déplaçable axialement (6), lequel moyen de rappel est réalisé de préférence sous forme d'élément de ressort (9), comprenant notamment un ressort de compression.

3. Dispositif de réglage (1) selon la revendication 1 ou 2, **caractérisé en ce que** le moyen de butée déplaçable axialement (6) vient en prise autour de la broche (2) à la manière d'une douille (8) et présente un élément (13) faisant saillie axialement et/ou radialement, en particulier un ergot, pour réaliser la surface de butée (20).

4. Dispositif de réglage (1) selon au moins la revendication 1 ou 2, **caractérisé en ce que** le dispositif de réglage présente un logement (16, 16a) disposé sur la broche (2) ou sur l'écrou de broche (3) pour le moyen de butée (6) déplaçable dans la direction axiale, lequel moyen de butée (6) est réalisé sous la forme d'une goupille (14) déplaçable axialement à l'encontre d'une force de rappel, de préférence **en ce que** le logement comprend un moyen de rappel, en particulier un élément de ressort (15), pour générer la force de rappel.

5. Dispositif de réglage (1) selon l'une quelconque des revendications précédentes, **caractérisé en ce que** les surfaces de butée (19, 20) s'étendent dans la direction radiale de la broche (2).

6. Dispositif de réglage (1) selon au moins l'une quelconque des revendications précédentes, **caractérisé en ce que** les surfaces de butée (19, 20) sont parallèles à l'axe de rotation (X).

7. Dispositif de réglage (1) selon au moins l'une quelconque des revendications précédentes, **caractérisé en ce qu'**au moins l'un des moyens de butée (5) présente, en plus de la surface de butée (19), une surface de rampe (18) montant dans une direction de rotation, en particulier **en ce que** l'au moins un moyen de butée (5) comprend un ergot (7), lequel ergot (7) est limité par la surface de butée (19) et la surface de rampe (18).

8. Dispositif de réglage (1) selon la revendication 7, **caractérisé en ce que** la surface de rampe (18) présente un angle de montée (α) qui est inférieur à 45°, de préférence inférieur à 35°, plus préférablement inférieur à 25°.

9. Dispositif de réglage (1) selon la revendication 7 ou 8, **caractérisé en ce que** la surface de rampe (18) et la surface de butée (19) forment un angle (α) inférieur à 90° et supérieur à 45°, de préférence supérieur à 55°, plus préférablement supérieur à 65°.

10. Dispositif de réglage (1) selon au moins l'une quelconque des revendications précédentes, **caractérisé en ce que** le filetage (4) de la broche (2) est réalisé sous forme de filetage trapézoïdal.

11. Dispositif de réglage (1) selon au moins l'une quelconque des revendications précédentes, **caractérisé en ce que** le dispositif de réglage (1) est réalisé sous forme de bras oscillant ou d'une partie d'un bras oscillant pour le châssis du véhicule.

12. Châssis d'un véhicule comprenant le dispositif de réglage (1) selon l'une quelconque des revendications précédentes.

13. Châssis selon la revendication 12, **caractérisé en ce que** le dispositif de réglage (1) fait partie d'une direction de roue arrière du châssis.
